# EUROPÄISCHE PATENTSCHRIFT

(11) **EP 2 673 506 B1**
(45) Veröffentlichungstag und Bekanntmachung des Hinweises auf die Patenterteilung: **16.08.2017**
(21) Anmeldenummer: 12700996.7
(22) Anmeldetag: 25.01.2012
(51) Int. Cl.: F04B 25/00, F04B 25/02, B60G 11/27, B60G 17/015, B60G 17/052, F04B 41/06

(54) **KOMPRESSORSCHALTUNG FÜR EINE PNEUMATISCHE REGELVORRICHTUNG EINES FAHRZEUGS**
ARRANGEMENT OF COMPRESSORS FOR A PNEUMATIC CONTROL DEVICE OF A VEHICLE
ARRANGEMENT DE COMPRESSEURS POUR UN APPAREIL DE RÉGLAGE PNEUMATIQUE DE VÉHICULE

(30) Priorität: 11.02.2011 DE 102011003985; 18.10.2011 DE 102011084666
(43) Veröffentlichungstag der Anmeldung: 18.12.2013
(73) Patentinhaber: Continental Teves AG & Co. OHG, 60488 Frankfurt (DE)
(72) Erfinder: FOLCHERT, Uwe, 31867 Lauenau (DE)
(74) Vertreter: Höer, Daniela
(86) Internationale Anmeldenummer: PCT/EP2012/051096
(87) Internationale Veröffentlichungsnummer: WO 2012/107284

(56) Entgegenhaltungen:
- EP-A1- 1 380 453
- EP-A1- 1 395 755
- DE-A1- 10 321 771
- DE-A1- 19 715 291
- DE-A1-102007 060 076
- DE-A1-102008 034 240

## Beschreibung

Die Erfindung betrifft eine Kompressorschaltung für eine pneumatische Regelvorrichtung eines Fahrzeugs.

Den bisherigen Stand der Technik für pneumatische Regelvorrichtungen eines Fahrzeugs geben folgende Druckschriften wieder:
DE 10240357A1, DE 102004028479A1, US 7255358B2, DE 10055108A1,
DE 3346911A1, EP1243447B1.

Den bisherigen Stand der Technik für mehrstufige Kompressoren geben folgende Druckschriften wieder:
DE 20102436 U1, WO 2007/130850, DE10321771A1,
DE 102008034240A1, DE 102007060076A1.

Demgegenüber liegt der Erfindung die Aufgabe zugrunde, eine verbesserte Vorrichtung für eine pneumatische Regelvorrichtung eines Fahrzeugs mit optimierter Kompressorschaltung zu schaffen.

Die der Erfindung zugrunde liegende Aufgabe wird mit den Merkmalen des unabhängigen Patentanspruchs gelöst. Bevorzugte Ausführungsformen der Erfindung sind in den abhängigen Patentansprüchen angegeben.

Es wird eine Kompressorschaltung für eine pneumatische Regelvorrichtung eines Fahrzeugs geschaffen, wobei die Kompressorschaltung ein zweistufiges Kompressorsystem umfasst mit einer Hochdruckstufe, einer Niedrigdruckstufe und einem zuschaltbaren zusätzlichen Volumen wobei:
- die Hochdruckstufe dazu ausgebildet ist, im Betriebsmodus einer geschlossenen Luftversorgung Regelvorgänge zur Beförderung von Luft von einem Druckluftspeicher in Richtung eines pneumatischen Aktuatorensystems und zur Beförderung von Luft von dem pneumatischen Aktuatorensystem in Richtung des Druckluftspeichersdurchzuführen,
- die Hochdruckstufe und die Niedrigdruckstufe einen gemeinsamen Kolben zur Luftkomprimierung in der Hochdruckstufe und der Niedrigdruckstufe aufweisen, das zuschaltbare zusätzliche Volumen dazu ausgebildet ist, im Betriebsmodus der geschlossenen Luftversorgung einen Schadraum der Niedrigdruckstufe so zu vergrößern, dass im Schadraum der Niedrigdruckstufe befindliche Luft auf den Kolben als eine pneumatische Feder wirkt.

In dem beschriebenen zweistufigen Kompressorsystem ist vorzugsweise die Größe der Hochdruckstufe alleine dazu geeignet, die im Betriebsmodus einer geschlossenen Luftversorgung (GLV) stattfindenden Regelvorgänge "Beförderung von Luft vom Druckluftspeicher zum pneumatischen Aktuatorensystem" und "Beförderung von Luft vom pneumatischen Aktuatorensystem zum Druckluftspeicher" bei begrenzter Leistung durchzuführen. Die in dem zweistufigen Kompressorsystem vorliegende Kombination aus Niedrigdruckstufe und Hochdruckstufe könnte in diesem Fall den Vorteil haben, dass eine gute Förderleistung unter Beibehaltung einer vorhandenen GLV-Förderleistung auch für den Fall einer Systembefüllung erreicht würde, wobei bei dieser unterschiedlicher Nutzung des zweistufigen Kompressorsystems keine weiteren aktiven Schaltelemente, wie z.B. Magnetventile, benutzt werden müssten.

In dem zweistufigen Kompressorsystem sind die Niedrigstufe und die Hochdruckstufe über einen gemeinsamen Kolben verbunden, an dessen beiden Enden unterschiedlich große Kolbenquerschnittsquerflächen senkrecht zur Kolbenachse fest angebracht sind. Auf die Kolbenquerschnittsfläche in der Hochdruckstufe wirkt ein Vordruck, der beispielsweise aus dem Druck der Systemluft in einem pneumatischen Aktuatorensystem und in Druckluftspeicher resultiert und abhängig von der Betriebsphase ist (Befüllung oder Entlüftung des pneumatischen Aktuatorensystems bzw. Aufregeln oder Abregeln der Fahrzeugkarosserie). Auf die Kolbenquerschnittsfläche in der Niederdruckstufe wirkt ein Druck, welcher aus dem an der Niedrigdruckstufe herrschenden Druck resultiert, welcher davon abhängt, welcher initiale Ausgangsdruck in der Niedrigdruckstufe herrscht, ob also das zusätzliche Volumen zugeschaltet oder nicht zugeschaltet ist, und ob z.B. Luft zusätzlich von einer äußeren Umgebung zugeführt wird oder nicht.

Im Falle, dass keine Luft aus der äußeren Umgebung zugeführt wird, also im Betriebsmodus einer geschlossenen Luftversorgung, kann im geschlossen System einerseits durch Zuschalten oder Abschalten des zusätzlichen Volumens der Druck in der Niedrigdruckstufe variiert werden. Durch das Zu- und Abschalten des zusätzlichen Volumens in Abhängigkeit vom aktuellen Druck in der Niedrigdruckstufe wird die pneumatische Feder realisiert. Die Niedrigdruckstufe wirkt im Betriebsmodus einer geschlossenen Luftversorgung wie eine pneumatische Feder: die Kraft, die auf der Seite der Hochdruckstufe durch den dort herrschenden Vordruck entsteht, wird durch den in der Niedrigdruckstufe aufgebauten Druck kompensiert.

So kann z.B. kann bei Vorherrschen eines hohen Drucks im Betriebsmodus einer geschlossenen Luftversorgung auf die Kolbenquerschnittsfläche in der Hochdruckstufe eine Vergrößerung des Schadraums der Niedrigdruckstufe durch Zuschalten eines zusätzlichen Volumens bewirken, dass ein zu schneller und zu hoher Druckanstieg in der Niedrigdruckstufe begrenzt wird. Durch den geringen Druckanstieg in der Niedrigdruckstufe wird eine gleichmäßige Kraft an der Kolbenquerschnittsfläche erzeugt und auf den Kolben der Hochdruckstufe übertragen. Diese Druckkraft bleibt auch beim Aufwärtshub in Richtung Hochdruckstufe erhalten. Die erforderliche Motorleistung zur Bewegung des gemeinsamen Kolbens in Richtung von der Niedrigdruckstufe zur Hochdruckstufe wird dadurch reduziert. Der Energiebedarf des Kompressorsystems wird verringert.

Bei Systembefüllung des Systems mit Luft aus einer äußeren Umgebung kann durch Abschalten eines zusätzlichen Volumens in der Niedrigdruckstufe der Vorgang des Ansaugens von Luft aus der Umgebung über einen Ansaugfilter und/oder über ein an der Niedrigdruckstufe sitzendes Ansaugventil verlängert und verstärkt werden, und zwar so lange bis sich ein bestimmter Verdichtungsdruck in der Niedrigdruckstufe im Verhältnis zum Vordruck in der Hochdruckstufe eingestellt hat. Die Förderleistung von Luft aus der Umgebung wird also verbessert.

Die Kombination aus einer Niedrigdruckstufe und einer Hochdruckstufe innerhalb eines Kompressorsystems ist daher geeignet, nicht nur den Energiebedarf des Kompressorsystems zu verringern, sondern durch eine Erhöhung der Förderleistung auch den Wirkungsgrad des Kompressorsystems zu verbessern.

Nach einer Ausführungsform der Erfindung umfasst die Kompressorschaltung weiter eine Überströmleitung und ein erstes Rückschlagventil, wobei
- die Hochdruckstufe an ihrer Auslassseite mit dem pneumatischen Aktuatorensystem und an ihrer Einlassseite mit der Überströmleitung verbunden ist,
- die Niedrigdruckstufe mit ihrer Auslassseite über die Überströmleitung mit der Einlassseite der Hochdruckstufe verbunden ist,
- das erste Rückschlagventil in der Überströmleitung angeordnet ist und eine Durchströmung von Luft ausschließlich in Richtung von der Niedrigdruckstufe zur Hochdruckstufe ermöglicht.

Dies kann den Vorteil haben, dass eine bestehende Druckdifferenz zwischen den an der Einlassseite des Hochdruckkompressors und an der Auslassseite der Niedrigdruckstufe herrschenden Drücken durch Strömen der Luft durch die Überströmleitung entsprechend des vorherrschenden Druckgefälles reduziert werden könnte. Dadurch könnte die Förderleistung des Kompressorsystems, insbesondere für die Betriebsphase der Systembefüllung, gesteigert werden. Durch eine Senkung der Differenz zwischen Vordruck (an der Einlassseite des Hochdruckkompressors) und Gegendruck (an der Auslassseite der Niedrigdruckstufe) des Kompressorsystems könnte die zu erbringende Kraft sinken, die das Kompressorsystem zur Beförderung von Druckluft aufbringen müsste.

Nach einer Ausführungsform der Erfindung ist das erste Rückschlagventil dazu ausgebildet, das Verhältnis zwischen dem an der Einlassseite der Hochdruckstufe anliegenden Druck und dem an der Auslassseite der Niedrigdruckstufe anliegenden Druck zu regulieren.

Dies kann den Vorteil haben, dass das in der Überströmleitung angeordnete erste Rückschlagventil die Funktion übernehmen könnte, das Verhältnis zwischen dem an der Einlassseite der Hochdruckstufe anliegenden Druck und dem an der Auslassseite der Niedrigdruckstufe anliegenden Druck zu regeln.

Nach einer Ausführungsform der Erfindung umfasst die Kompressorschaltung weiter ein Druckbegrenzungsventil und ein zweites Rückschlagventil, wobei das Druckbegrenzungsventil und das zweite Rückschlagventil zwischen der Auslassseite der Niedrigdruckstufe, dem zusätzlichen Volumen und der Einlassseite der Hochdruckstufe angeordnet sind, wobei das zweite Rückschlagventil dazu ausgebildet ist, eine Strömung der Luft ausschließlich in Richtung von der Auslassseite der Niedrigdruckstufe zum zusätzlichen Volumen und/oder in Richtung zu der Einlassseite der Hochdruckstufe hin zu ermöglichen, und das Druckbegrenzungsventil dazu ausgebildet ist, in einem Schaltzustand einen Luftpfad zwischen der Auslassseite der Niedrigdruckstufe, dem Druckluftspeicher und der Einlassseite der Hochdruckstufe zu ermöglichen und in einem weiteren Schaltzustand den Luftpfad zwischen der Auslassseite der Niedrigdruckstufe, dem Druckluftspeicher und der Einlassseite der Hochdruckstufe zu unterbinden.

Dass das zweite an der der Auslassseite der Niedrigdruckstufe positionierte Rückschlagventil dazu ausgebildet ist, eine Strömung der Luft ausschließlich in Richtung von der Auslassseite der Niedrigdruckstufe zum zusätzlichen Volumen und/oder in Richtung zu der Einlassseite der Hochdruckstufe hin zu ermöglichen, kann den Vorteil haben, dass Luft aus der Umgebung zur Systembefüllung ohne Rückexpansion in das zusätzliche Volumen und/oder als Vorfüllung in die Hochdruckstufe geleitet werden kann, wenn gleichzeitig der Schaltzustand des Druckbegrenzungsventils einen Luftpfad zwischen der Auslassseite der Niedrigdruckstufe, dem Druckluftspeicher und der Einlassseite der Hochdruckstufe zu unterbindet.

Unter diesen Bedingungen kann z.B. bei sehr geringem Systemdruck der pneumatischen Regelvorrichtung aufgrund zu geringer Systemluftmenge, Luft unidirektional durch das zweite Rückschlagventil über die Überströmleitung in die Hochdruckstufe strömen, wo sie weiter verdichtet und von dort weiter zur Systembefüllung in den Druckluftspeicher oder in das pneumatische Aktuatorensystem geleitet wird.

Dass das Druckbegrenzungsventil dazu ausgebildet ist, in einem Schaltzustand einen Luftpfad zwischen der Auslassseite der Niedrigdruckstufe, dem Druckluftspeicher und der Einlassseite der Hochdruckstufe zu unterbinden, kann den Vorteil haben, das bei diesem Schaltzustand des Druckventils Luft nur über das zweite Rückschlagventil unidirektional von der Auslassseite der Niedrigdruckstufe zum Druckluftspeicher oder durch die Überströmleitung in die Hochdruckstufe strömen kann und damit die Systembefüllung im Betriebsmodus der offenen Luftversorgung (OLV) stattfinden kann. Bei diesem Schaltmodus des Druckventils wird somit die Förderleistung des Kompressorsystems für die Systembefüllung (OLV-Fall) optimiert.

Dass das Druckbegrenzungsventil dazu ausgebildet ist, in einem weiteren Schaltzustand den Luftpfad zwischen der Auslassseite der Niedrigdruckstufe, dem Druckluftspeicher und der Einlassseite der Hochdruckstufe zu ermöglichen, kann den Vorteil haben, dass nun Luft aus dem Druckluftspeicher und aus der Überströmleitung über das geöffnete Druckbegrenzungsventil wieder zurück in die Niedrigdruckstufe strömen kann. Im Betriebsmodus der geschlossenen Luftversorgung kann dadurch in der Niedrigdruckstufe ein Verdichtungsdruck aufgebaut werden, um die Kraft, die durch den Vordruck, welcher an der Einlassseite der Hochdruckstufe herrscht, zu kompensieren. Bei diesem geöffneten Schaltzustand des Druckbegrenzungsventils wird somit im Betriebsmodus der geschlossenen Betriebsversorgung (GLV) die Druckdifferenz zwischen dem Druck, der an der Einlassseite der Hochdruckstufe herrscht, und dem Druck, der an der Niedrigdruckstufe herrscht, verringert, so dass die Kraft, die das Kompressorsystem insgesamt aufbringen muss, um Luft zu befördern, verringert wird. Im geöffneten Schaltzustand des Druckventils wird somit die Förderleistung des Kompressorsystems im GLV-Betriebsmodus optimiert.

Die Kombination aus zweitem Rückschlagventil und Druckbegrenzungsventil ermöglicht somit in Abhängigkeit vom Schaltzustand des Druckbegrenzungsventils eine Feinregulierung der Förderleistung des Kompressorsystems sowohl im OLV- als auch im GLV-Betriebsmodus.

Nach einer Ausführungsform der Erfindung bilden das Druckbegrenzungsventil und das zweite Rückschlagventil eine Baugruppe, wobei die Baugruppe mindestens ein Gehäuse, einen Dichteteller, ein Federsystem, eine Öffnung des Gehäuses und einen Auslass des Gehäuses umfasst,
- wobei in dem Gehäuse der Dichtteller beweglich angeordnet ist,
- wobei der Dichtteller durch das Federsystem dichtend gegen die Öffnung des Gehäuses drückbar ist,
- wobei die Auslassseite der Niedrigdruckstufe mit der Öffnung durch einen Luftpfad verbunden ist,
- wobei der Auslass des Gehäuses dazu ausgebildet ist, einen Luftpfad zwischen dem Innenraum des Gehäuses, dem zusätzlichen Volumen und der Einlassseite der Hochdruckstufe zu ermöglichen,
- wobei der Auslass des Gehäuses so am Gehäuse angeordnet ist, dass im Fall, dass der Dichtteller durch das Federsystem dichtend gegen die Öffnung des Gehäuses gedrückt ist, ein Luftpfad zwischen dem Auslass und dem Inneren des Gehäuses ermöglicht wird und dass im Fall, dass der Dichtteller die Öffnung freigibt, ein Luftpfad zwischen dem Auslass und der Öffnung durch das Gehäuse hindurch ermöglicht wird.

Die Vereinigung von zweitem Rückschlagventil und Druckbegrenzungsventil zu einer Baugruppe kann den Vorteil haben, dass die Funktionsweise der Niedrigdruckstufe als "pneumatische Feder" im GLV-Betriebsmodus -wie oben bereits beschrieben - durch bedarfweises, Druck gesteuertes Hinzu- und Wegschalten einer Luftsäule im Druckluftspeicher und in der Überströmleitung sowie durch Ver- und Entdichtung von Luft in der Niedrigdruckstufe verstärkt wird. Das in der Baugruppe realisierte Prinzip einer von den am Dichteteller herrschenden Druckverhältnissen gesteuerten Öffnung oder Schließung des Dichtetellers verleiht der Niedrigdruckstufe die Möglichkeit einer Selbstregulation hinsichtlich ihrer Funktion als "pneumatische Feder". Dabei lassen sich durch die Auslegungsparameter der Federkraft des im Gehäuse sitzenden Federsystems und der Größe der Öffnung des Gehäuses die Parameter für die Selbstregulation der Wirkungsweise der Niedrigdruckstufe bestimmen.

Vorteilhaft ist weiterhin, dass die Anzahl der erforderlichen Bauteile reduziert wird, was eine Verringerung des Bauraums und gleichzeitig eine Kostenersparnis impliziert. Zudem wird die Fehleranfälligkeit reduziert.

Nach einer Ausführungsform der Erfindung weist das Kompressorsystem weiter eine Förderleistung auf, wobei das Verhältnis zwischen dem an der Einlassseite der Hochdruckstufe anliegenden Druck und dem an der Auslassseite der Niedrigdruckstufe anliegenden Druck so regulierbar ist, dass die Förderleistung des Kompressorsystems auf einen vordefinierten Wert eingestellt wird.

Dies kann den Vorteil haben, dass z.B. die Kompressorschaltung für den OLV-Betriebsmodus hinsichtlich der Förderleistung optimiert werden kann, so dass die Systembefüllung mit Ansaugen von Luft von außen auch unter ungünstigen Randbedingungen (z.B. in großen Höhen) ausreichend schnell (z.B. im Werkstattfall oder nach langer Standzeit durch Leckage) realisiert werden kann. Gleichzeitig kann durch die Regulierung der Druckverhältnisse an der Hoch- und Niedrigdruckstufe die Förderleistung im GLV-Betriebsmodus, ohne Änderung der Auslegung des Kompressorsystems und ohne Zuschalten von zusätzlichen externen Schaltelementen, so eingestellt werden, dass das Hubvolumen und der Leistungsbedarf des Kompressorsystems nicht zu groß werden, was nach dem bisherigen Stand der Technik bei Auslegung des Kompressors auf die OLV-Bedingungen ein unlösbares Problem darstellen könnte.

Nach einer Ausführungsform der Erfindung ist das Verhältnis zwischen dem an der Einlassseite der Hochdruckstufe anliegenden Druck und dem an der Auslassseite der Niedrigdruckstufe anliegenden Druck so regulierbar, dass ein für den Betrieb der Kompressorschaltung erforderlicher elektrischer Strom einen vordefinierten Wert annimmt.

Dies kann den Vorteil haben, dass ein zulässiger Motorstrom des Kompressors oder ein sonstiger maximal zulässiger elektrischer Strom im Fahrzeug nicht überschritten werden. Trotz Optimierung der Förderleistung im OLV- und GLV-Betriebsmodus kann bei der Erfindung die kann der für den Betrieb der Kompressorschaltung erforderliche Strom gesenkt werden. Im Stand der Technik hingegen musste bisher z.B. ein Auslegungskompromiss zwischen Förderleistung im GLV-Fall bzw. Luftbeförderung aus der Umgebung im OLV-Fall und dem maximal zulässigen elektrischen Strom im Fahrzeug eingegangen werden. Diese Kompromisslösung ist bei der beschriebenen Erfindung nicht mehr erforderlich.

Nach einer Ausführungsform der Erfindung ist für den Betriebsmodus einer geschlossenen Luftversorgung eine Umschalteinheit zwischen dem Kompressorsystem, dem pneumatischen Aktuatorensystem und dem Druckluftspeicher angeordnet und ermöglicht in einem Schaltzustand einen Luftstrom in Richtung ausschließlich von der Auslassseite der Hochdruckstufe zum pneumatischen Aktuatorensystem und gleichzeitig einen Luftstrom in Richtung ausschließlich vom Druckluftspeicher zur Einlassseite der Hochdruckstufe und in einem weiteren Schaltzustand einen Luftstrom in Richtung ausschließlich von der Auslassseite der Hochdruckstufe zum Druckluftspeicher und gleichzeitig einen Luftstrom in Richtung ausschließlich vom pneumatorischen Aktuatorensystem zur Einlassseite der Hochdruckstufe.

Dies kann den Vorteil haben, dass durch die jeweilige Einstellung des Schaltzustandes der Umschalteinheit genau definiert werden kann, in welcher Betriebsphase die Luftbefüllung des pneumatorischen Aktuatorensystems zum Anheben des Fahrzeuggestells und in welcher Betriebsphase die Entlüftung des pneumatorischen Aktuatorensystems zum Absenken des Fahrzeuggestells stattfinden soll. Die Umschalteinheit gewährleistet in beiden GLV-Regelvorgängen Unidirektionalität der Luftströmung, Eindeutigkeit der GLV-Betriebszustände und eine strikte Trennung vom Systembefüllungsapparat (Lufttrockner- und/oder Luftansaugsystem) für eine Luftzufuhr aus der äußeren Umgebung, wodurch die Effizienz und der Wirkungsgrad der beiden GLV-Regelvorgänge gesteigert wird.

Dadurch, dass die Umschalteinheit an der Auslassseite der Hochdruckstufe angeordnet ist, wird gewährleistet, dass die Beförderung der Luft zwischen dem pneumatischen Aktuatorensystem und dem Druckluftspeicher in beiden Richtungen bei hohen Druckverhältnissen abläuft, was eine weitere Steigerung der Effizienz und des Wirkungsgrads der beiden GLV-Regelvorgänge impliziert.

Nach einer Ausführungsform der Erfindung ist die Umschalteinheit als ein 4/2-Wegeventil oder aus einer Kombination von zwei 3/2-Wegeventilen ausgebildet.

Die Ausbildung des Umschaltventils als 4/2-Wegeventil kann den Vorteil haben, dass durch minimalen Materialeinsatz durch nur zwei verschiedene Schaltzustände und vier vorliegende Anschlüsse zwei getrennte, jeweils in entgegen gesetzter Richtung verlaufende Luftströmungen zwischen dem pneumatischen Aktuatorensystem und dem Druckluftspeicher realisiert werden können.

Die Ausbildung des Umschaltventils als eine Kombination von zwei 3/2-Wegeventilen kann den Vorteil haben, dass die technische Realisierung eines Umschaltens zwischen den beiden GLV-Regelvorgängen "Luftförderung vom pneumatischen Aktuatorensystem zum Druckluftspeicher" und "Luftförderung vom Druckluftspeicher zum pneumatischen Aktuatorensystem" erheblich erleichtert wird. Es ist technisch leichter, zwei 3/2-Wege-Magnetventile zu steuern als ein 4/2-Wege-Magnetventil.

Die Ausführungsformen der Erfindung könnten eine pneumatische Regelvorrichtung eines Fahrzeugs mit z.B. folgenden Vorteilen hinsichtlich der Konstruktion einer Kompressorsystems in einer pneumatischen Regelvorrichtung liefern:
- Beibehaltung einer vorhanden GLV-Förderleistung,
- Maximierung der Förderleistung aus der Umgebung auf das Niveau einer offenen Luftversorgung,
- Einhaltung des max. elektrischen Stromes sowohl für den GLVals auch den OLV-Betriebsmodus,
- kein Erfordernis zusätzlicher externer Schaltventile beim Wechsel des Betriebsmodus.

Im Folgenden werden bevorzugte Ausführungsformen der Erfindung anhand der folgenden Zeichnungen näher erläutert.

Es zeigen:
- Figur 1: zweistufiger Kompressor mit Niedrigdruckstufe und Hochdruckstufe, eingebettet in eine pneumatische Regelvorrichtung,
- Figur 2: zweistufiges Kompressorsystem mit zusätzlichem Druckbegrenzungsventil und Rückschlagventil,
- Figur 3: eine Ausführungsform für die Kombination aus Druckbegrenzungsventil und Rückschlagventil,
- Figur 4: zwei 3/2 Wege-Ventile als Ausprägungsform für die Umschalteinheit.

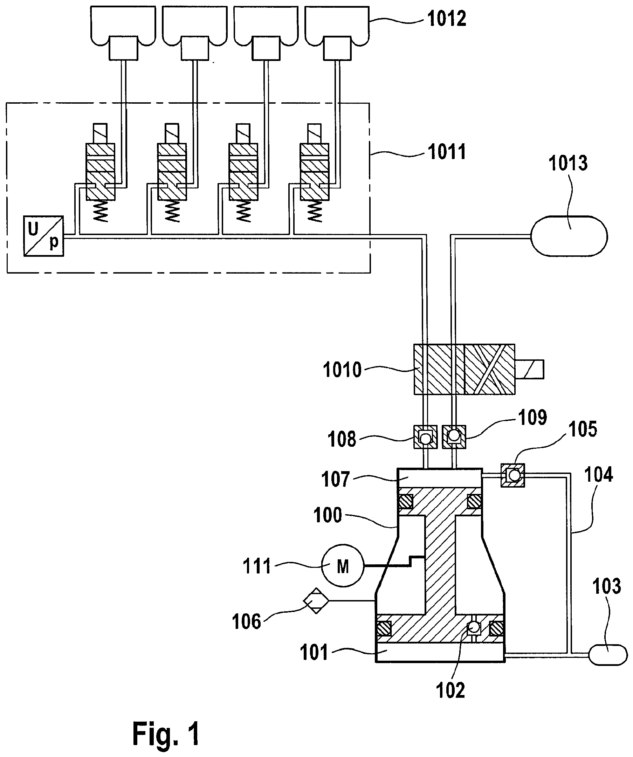

Fig. 1: zeigt ein zweistufiges Kompressorsystem 100. Wie nach dem Stand der Technik bekannt, wird z.B. dabei die Niedrigdruckstufe 101 vom Hubvolumen größer ausgelegt als die Hochdruckstufe 107. Dadurch können die Verdichtungsstufen so aufgeteilt werden, dass eine gleichmäßige Belastung und gute Ausnutzung der Verdichterstufen erfolgt.

Die Größe der Hochdruckstufe 107 alleine (1-stufig) ist geeignet, die Anforderung im Regelfall der geschlossenen Luftversorgung bei begrenzter Leistung zu erfüllen. Die Kombination aus Niedrigdruckstufe 101 und Hochdruckstufe 107 ist geeignet, eine gute Förderleistung für die Systembefüllung zu erreichen.

Die beschriebene Kompressorschaltung 100 ist zur Verwendung im Betriebsmodus einer geschlossenen Luftversorgung und/oder im Betriebsmodus einer offenen Luftversorgung ausgebildet. Dies kann den Vorteil haben, dass für den Betriebsmodus einer geschlossenen Luftversorgung (GLV) und für den Betriebsmodus einer offenen Luftversorgung (OLV) keine zusätzlichen Einsatzbedingungen erfüllt werden müssen und keine Kompromisse bei der Auslegung des Kompressorsystems eingegangen werden müssen. Der nach dem bisherigen Stand der Technik bestehende Auslegungskonflikt des Kompressors für den GLV- oder OLV-Betriebsmodus wird durch die beschriebene Erfindung beseitigt.

Das beschriebene zweistufige Kompressorsystem 100 mit Niedrigdruck 101 - und Hochdruckstufe 107 muss in seiner Bauweise, Anordnung und sonstigen Auslegung nicht verändert werden, um die unterschiedlichen Bedingungsparameter für einen Betrieb der pneumatischen Regelvorrichtung eines Fahrzeugs im Betriebsmodus einer geschlossenen, offenen oder halbgeschlossenen Luftversorgung zu erfüllen. Es stellt z.B. ein fixes Modul einer pneumatischen Regelvorrichtung dar, an das weitere beliebige Module einer Druckluftvorrichtung angeschlossen werden können. Um die unterschiedlichen Betriebsparameter für die verschiedenen Betriebsmodi einer geschlossenen, offenen oder halbgeschlossenen Luftversorgung zu erfüllen, brauchen also nur noch die Betriebsparameter der angeschlossenen anderen Module bzw. Subsysteme verändert werden. Dies erleichtert nicht nur die Berechnung der Betriebsparameter aufgrund eingeschränkter Variablenanzahl, sondern erleichtert auch den Herstellungsprozess erheblich.

Die Nutzung des beschriebenen zweistufigen Kompressorsystems 100 in verschiedenen Betriebsmodi erfolgt ohne Hinzu- bzw. Abschaltung von zusätzlichen aktiven Schaltelementen (z.B. Magnetventile).

Daher wird vorgesehen, dass im Betriebsmodus einer geschlossenen Luftversorgung die Niedrigdruckstufe 101 als pneumatische Feder dient, die die Kraft, die auf der Seite der Hochdruckstufe 107 durch den Vordruck entsteht, kompensiert. Dies hilft, den guten Wirkungsgrad und damit geringen Energieverbrauch im Betriebsmodus einer geschlossenen Luftversorgung zu realisieren.

Das wird dadurch realisiert, dass durch einen vergrößerten Schadraum oder ein zusätzliches Volumen 103 an der Niedrigdruckstufe 101 der Druckanstieg begrenzt wird und das Rückschlagventil 105 in der Überströmleitung 104 zur Hochdruckstufe 107 bei entsprechend hohem Vordruck geschlossen bleibt. D.h. es wird solange Luft aus der Umgebung über den Ansaugfilter 106 über das an der Seite der Niedrigdruckstufe 101 liegende Ansaugventil 102 gefördert, bis sich ein bestimmter Verdichtungsdruck im Verhältnis zum Vordruck in der Hochdruckstufe 107 eingestellt hat. Danach fördert die Niedrigdruckstufe 101 kein Volumenstrom.

Ist der Vordruck am Ausgang der Hochdruckstufe sehr gering (bei zu geringer Systemluftmenge) oder ist der Vordruck durch eine entsprechende Ventilstellung der Umschalteinheit 1010 abgeschaltet, öffnen das Rückschlagventil 102 und die vorverdichtete Luft aus der Niedrigdruckstufe 101 kann über die Überströmleitung 104 direkt in die Hochdruckstufe 107 fließen. Sie wird dort weiterverdichtet und zur Systembefüllung in den Speicher 1013 oder das Luftfedersystem 1012 geleitet.

Die Auslegung der Niedrigdruckstufe 101 und der Hochdruckstufe 107 sind dementsprechend aufeinander abzustimmen (z.B. in einem Flächenverhältnis Niedrigdruckstufe/Hochdruckstufe von ca. 2 - 3,5).

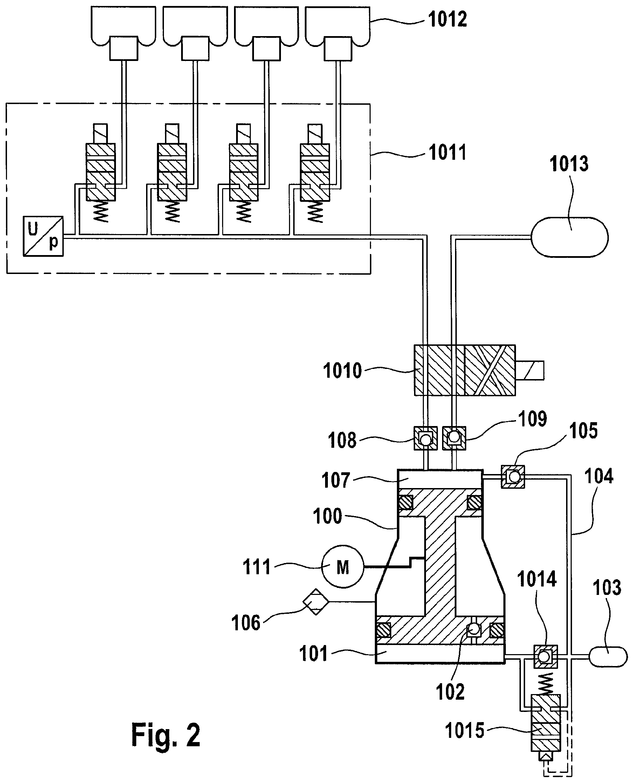

Fig. 2 zeigt das zweistufige Kompressorsystem mit zwischen der Niedrigdruckstufe 101 und den zusätzlichen Volumen 103 zusätzlich angeordnetem Druckbegrenzungsventil 1015 und zweitem Rückschlagventil 1014.

Um einen guten Wirkungsgrad für die Förderung aus der Umgebung (Systembefüllung) zu erreichen, kann als Weiterbildung der Erfindung ein zusätzliches zweites Rückschlagventil 1014 in Kombination mit einem Druckbegrenzungsventil 1015 eingesetzt werden. Dadurch wird erreicht, dass Luft aus der Niedrigdruckstufe 101 zunächst ohne Rückexpansion in das zusätzliche Volumen 103 gefördert werden kann und als Vorfüllung in die Hochdruckstufe 107 geleitet wird.

Soll im geschlossenen Betrieb gearbeitet werden, erhöht sich der Vordruck im Hochdruckstufenverdichter 107 durch Umschalten der Umschalteinheit 1010. Es kann dann die Luft aufgrund des Gegendruckes nicht über das Rückschlagventil 105 in die Hochdruckstufe 107 einfließen. Es erhöht sich dadurch auch der Druck im zusätzlichen Volumen 103. In diesem Fall strömt die Luft über das Druckbegrenzungsventil 1015 zurück in den Verdichtungsraum der Niedrigdruckstufe 101 und wird zur Kraftkompensation genutzt. Dabei ist das Druckbegrenzungsventil 1015 so ausgelegt, dass bei Förderung im offenen Betrieb (Systembefüllung) ein ausreichend großer Druck in der Niedrigdruckstufe 101 als Vordruck für die Hochdruckstufe 107 erreicht wird, im geschlossenen Betrieb aber bei üblichen Vordrücken (> 3 bis 5 bar) eine Rückströmung erfolgen kann. Z.B. kann das Druckbegrenzungsventil 1015 in einem Druckbereich von 3 bis 5 bar öffnen.

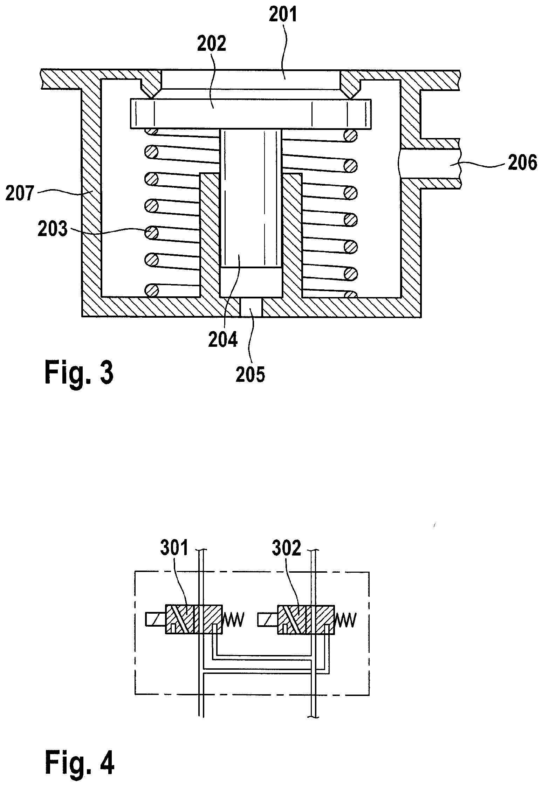

Wie in Fig. 3 gezeigt, kann die Kombination aus Rückschlagventil 1014 und Druckbegrenzungsventil 1015 konstruktiv in einer Baugruppe zusammengefasst werden. Es ist vorgesehen, dass die Luft aus dem Niedrigdruck-Kompressor 101 durch eine ausreichend große Öffnung 201 auf den Dichtteller 202 trifft. Dabei gibt der Dichtteller (202) die Öffnung (201) druckabhängig frei. Der Dichtteller (202) wird durch eine Feder 203 in den Dichtsitz gedrückt. Das Schließen wird durch den Druck aus der Auslassseite 206 unterstützt. Erhöht sich der Druck im Verdichtungsvorgang der Niedrigdruckstufe 101, wird der Dichtteller 202 gegen die Federkraft nach unten gedrückt und die Luft wird über den Auslass 206 in das Volumen 103 bzw. die Überströmleitung 104 geleitet.

Am Dichtteller 202 ist ein Kolben 204 angebracht, der im Gehäuse 207 beweglich abgedichtet ist. Die durch den Kolben verdrängte Luft steht über die Bohrung 205 mit der Umgebung in Verbindung. Dadurch wird erreicht, dass bei einem entsprechend hohen Druck im Auslasskanal 206 der Dichtteller 202 geöffnet bleibt und es zu der gewünschten Rückströmung in die Niedrigdruckstufe 101 kommen kann und damit als pneumatische Feder wirksam wird. Die Auslegung des Öffnungsdruckes kann durch Dimensionierung der Kolbengröße und der Federkraft erfolgen.

Fig. 4 zeigt eine weitere mögliche Ausprägungsform der Erfindung, wobei die Umschalteinheit, das in Fig. 1 als ein 4/2-Wegeventil ausgebildet ist, als zwei 3/2 Wege-Ventile ausgebildet ist.

## Patentansprüche

1. Kompressorschaltung für eine pneumatische Regelvorrichtung eines Fahrzeugs, wobei die Kompressorschaltung ein zweistufiges Kompressorsystem (100) umfasst mit einer Hochdruckstufe (107), einer Niedrigdruckstufe (101) und einem zuschaltbaren zusätzlichen Volumen (103) wobei:
- die Hochdruckstufe (107) und die Niedrigdruckstufe (101) einen gemeinsamen Kolben zur Komprimierung von in der Hochdruckstufe (107) und der Niedrigdruckstufe (101)befindlicher Luft aufweisen,
**dadurch gekennzeichnet, dass** :
- die Hochdruckstufe (107) dazu ausgebildet ist, im Be triebsmodus einer geschlossenen Luftversorgung Regelvorgänge zur Beförderung von Luft von einem Druckluftspeicher (1013) in Richtung eines pneumatischen Aktuatorensystems (1012) und zur Beförderung von Luft von dem pneumatischen Aktuatorensystem (1012) in Richtung des Druckluftspeichers (1013) durchzuführen,
- die Niedrigdruckstufe (101) so ausgebildet ist, dass im Betriebsmodus der geschlossenen Luftversorgung durch Zuschalten des zusätzlichen Volumens der Schadraum (103) der Niedrigdruckstufe (101) vergrößert wird und im Schadraum der Niedrigdruckstufe (101) befindliche Luft auf den Kolben als eine pneumatische Feder wirkt.

2. Kompressorschaltung nach Anspruch 1, weiter umfassend eine Überströmleitung (104) und ein erstes Rückschlagventil (105), wobei
- die Hochdruckstufe (107) an ihrer Auslassseite mit dem pneumatischen Aktuatorensystem und an ihrer Einlassseite mit der Überströmleitung (104) verbunden ist,
- die Niedrigdruckstufe (101) mit ihrer Auslassseite über die Überströmleitung (104) mit der Einlassseite der Hochdruckstufe (107) verbunden ist,
- das erste Rückschlagventil (105) in der Überströmleitung (104) angeordnet ist und eine Durchströmung von Luft ausschließlich in Richtung von der Niedrigdruckstufe (101) zur Hochdruckstufe (107) ermöglicht.

3. Kompressorschaltung nach Anspruch 2, wobei das erste Rückschlagventil (105) dazu ausgebildet ist, das Verhältnis zwischen dem an der Einlassseite der Hochdruckstufe (107) anliegenden Druck und dem an der Auslassseite der Niedrigdruckstufe (101) anliegenden Druck zu regulieren.

4. Kompressorschaltung nach Anspruch 3, wobei die Kompressorschaltung weiter ein Druckbegrenzungsventil (1015) und ein zweites Rückschlagventil (1014) umfasst, wobei das Druckbegrenzungsventil (1015) und das zweite Rückschlagventil (1014) zwischen der Auslassseite der Niedrigdruckstufe (101), dem zusätzlichen Volumen (103) und der Einlassseite der Hochdruckstufe (107) angeordnet sind, wobei das zweite Rückschlagventil (1014) dazu ausgebildet ist, eine Strömung der Luft ausschließlich in Richtung von der Auslassseite der Niedrigdruckstufe (101) zum zusätzlichen Volumen (103) und/oder in Richtung zu der Einlassseite der Hochdruckstufe (107) hin zu ermöglichen, und das Druckbegrenzungsventil (1015) dazu ausgebildet ist, in einem Schaltzustand einen Luftpfad zwischen der Auslassseite der Niedrigdruckstufe (101), dem zusätzlichen Volumen (103) und der Einlassseite der Hochdruckstufe (107) zu ermöglichen und in einem weiteren Schaltzustand den Luftpfad zwischen der Auslassseite der Niedrigdruckstufe (101), dem zusätzlichen Volumen (103) und der Einlassseite der Hochdruckstufe (107) zu unterbinden.

5. Kompressorschaltung nach Anspruch 4, wobei das Druckbegrenzungsventil (1015) und das zweite Rückschlagventil (1014) eine Baugruppe bilden, wobei die Baugruppe mindestens ein Gehäuse (207), einen Dichteteller (202), ein Federsystem (203), eine Öffnung (201) des Gehäuses (207) und einen Auslass (206) des Gehäuses (207) umfasst,
- wobei in dem Gehäuse (207) der Dichtteller (202) beweglich angeordnet ist,
- wobei der Dichtteller (202) durch das Federsystem (203) dichtend gegen die Öffnung (201) des Gehäuses (207) drückbar ist,
- wobei die Auslassseite der Niedrigdruckstufe (101) mit der Öffnung (201) durch einen Luftpfad verbunden ist,
- wobei der Auslass (206) des Gehäuses (207) dazu ausgebildet ist, einen Luftpfad zwischen dem Innenraum des Gehäuses (207), dem zusätzlichen Volumen (103) und der Einlassseite der Hochdruckstufe (107) zu ermöglichen,
- wobei der Auslass (206) des Gehäuses (207) so am Gehäuse (207) angeordnet ist, dass im Fall, dass der Dichtteller (202) durch das Federsystem (203) dichtend gegen die Öffnung (201) des Gehäuses (207) gedrückt ist, ein Luftpfad zwischen dem Auslass (206) und dem Inneren des Gehäuses (207) ermöglicht wird und dass im Fall, dass der Dichtteller (202) die Öffnung (201) freigibt ein Luftpfad zwischen dem Auslass (206) und der Öffnung (201) durch das Gehäuse (207) hindurch ermöglicht wird.

6. Kompressorschaltung nach Anspruch 3, wobei das Kompressorsystem weiter eine Förderleistung aufweist, wobei das Verhältnis zwischen dem an der Einlassseite der Hochdruckstufe (107) anliegenden Druck und dem an der Auslassseite der Niedrigdruckstufe (101) anliegenden Druck so regulierbar ist, dass die Förderleistung des Kompressorsystems auf einen vordefinierten Wert eingestellt wird.

7. Kompressorschaltung nach Anspruch 3, wobei das Verhältnis zwischen dem an der Einlassseite der Hochdruckstufe (107) anliegenden Druck und dem an der Auslassseite der Niedrigdruckstufe (101) anliegenden Druck so regulierbar ist, dass ein für den Betrieb der Kompressorschaltung erforderlicher elektrischer Strom einen vordefinierten Wert annimmt.

8. Kompressorschaltung nach Anspruch 1, wobei für den Betriebsmodus der geschlossenen Luftversorgung eine Umschalteinheit (1010) zwischen dem Kompressorsystem, dem pneumatischen Aktuatorensystem (1012) und dem Druckluftspeicher (1013) angeordnet ist und in einem Schaltzustand einen Luftstrom in Richtung ausschließlich von einer Auslassseite der Hochdruckstufe (107) zum pneumatischen Aktuatorensystem (1012) und gleichzeitig einen Luftstrom in Richtung ausschließlich vom Druckluftspeicher (1013) zu einer Einlassseite der Hochdruckstufe (107) ermöglicht und in einem weiteren Schaltzustand einen Luftstrom in Richtung ausschließlich von der Auslassseite der Hochdruckstufe (107) zum Druckluftspeicher (1013) und gleichzeitig einen Luftstrom in Richtung ausschließlich vom pneumatorischen Aktuatorensystem (1012) zur Einlassseite der Hochdruckstufe (107) ermöglicht.

9. Kompressorschaltung nach Anspruch 8, wobei die Umschalteinheit (1010) als ein 4/2-Wegeventil (1010) oder aus einer Kombination von zwei 3/2-Wegeventilen (301 und 302)) ausgebildet ist.

## Claims

1. Compressor circuit for a pneumatic control device of a vehicle, wherein the compressor circuit comprises a two-stage compressor system (100) having a high-pressure stage (107), a low-pressure stage (101) and an activatable additional volume (103), wherein:
- the high-pressure stage (107) and the low-pressure stage (101) have a common piston for compressing air situated in the high-pressure stage (107) and in the low-pressure stage (101),
**characterized in that**
- the high-pressure stage (107) is designed so as, in the operating mode of a closed air supply, to perform control processes for delivering air from a compressed-air accumulator (1013) in the direction of a pneumatic actuator system (1012) and for delivering air from the pneumatic actuator system (1012) in the direction of the compressed-air accumulator (1013),
- the low-pressure stage (101) is designed such that, in the operating mode of the closed air supply, by activation of the additional volume, the dead space (103) of the low-pressure stage (101) is enlarged, and air situated in the dead space of the low-pressure stage (101) acts on the piston as a pneumatic spring.

2. Compressor circuit according to Claim 1, furthermore comprising a flow transfer line (104) and a first check valve (105), wherein
- the high-pressure stage (107) is connected at its outlet side to the pneumatic actuator system and at its inlet side to the flow transfer line (104),
- the low-pressure stage (101) is connected by means of its outlet side via the flow transfer line (104) to the inlet side of the high-pressure stage (107),
- the first check valve (105) is arranged in the flow transfer line (104) and permits a throughflow of air exclusively in the direction from the low-pressure stage (101) to the high-pressure stage (107).

3. Compressor circuit according to Claim 2, wherein the first check valve (105) is designed to regulate the ratio between the pressure prevailing at the inlet side of the high-pressure stage (107) and the pressure prevailing at the outlet side of the low-pressure stage (101).

4. Compressor circuit according to Claim 3, wherein the compressor circuit furthermore comprises a pressure-limiting valve (1015) and a second check valve (1014), wherein the pressure-limiting valve (1015) and the second check valve (1014) are arranged between the outlet side of the low-pressure stage (101), the additional volume (103) and the inlet side of the high-pressure stage (107), wherein the second check valve (1014) is designed to permit a flow of the air exclusively in the direction from the outlet side of the low-pressure stage (101) to the additional volume (103) and/or in the direction of the inlet side of the high-pressure stage (107), and the pressure-limiting valve (1015) is designed so as, in one switching state, to allow an air path between the outlet side of the low-pressure stage (101), the additional volume (103) and the inlet side of the high-pressure stage (107) and, in a further switching state, to prohibit the air path between the outlet side of the low-pressure stage (101), the additional volume (103) and the inlet side of the high-pressure stage (107).

5. Compressor circuit according to Claim 4, wherein the pressure-limiting valve (1015) and the second check valve (1014) form an assembly, wherein the assembly comprises at least one housing (207), a sealing plate (202), a spring system (203), an opening (201) of the housing (207), and an outlet (206) of the housing (207),
- wherein the sealing plate (202) is arranged in movable fashion in the housing (207),
- wherein the sealing plate (202) can be pressed with sealing action against the opening (201) of the housing (207) by the spring system (203),
- wherein the outlet side of the low-pressure stage (101) is connected to the opening (201) by means of an air path,
- wherein the outlet (206) of the housing (207) is designed to allow an air path between the interior space of the housing (207), the additional volume (103) and the inlet side of the high-pressure stage (107),
- wherein the outlet (206) of the housing (207) is arranged on the housing (207) such that, in the situation in which the sealing plate (202) is pressed sealingly against the opening (201) of the housing (207) by the spring system (203), an air path is allowed between the outlet (206) and the interior of the housing (207), and such that, in the situation in which the sealing plate (202) opens up the opening (201), an air path is allowed through the housing (207) between the outlet (206) and the opening (201).

6. Compressor circuit according to Claim 3, wherein the compressor system furthermore has a delivery power, wherein the ratio between the pressure prevailing at the inlet side of the high-pressure stage (107) and the pressure prevailing at the outlet side of the low-pressure stage (101) can be regulated such that the delivery power of the compressor system is set to a predefined value.

7. Compressor circuit according to Claim 3, wherein the ratio between the pressure prevailing at the inlet side of the high-pressure stage (107) and the pressure prevailing at the outlet side of the low-pressure stage (101) can be regulated such that an electrical current required for the operation of the compressor circuit assumes a predefined value.

8. Compressor circuit according to Claim 1, wherein, for the operating mode of the closed air supply, a switching unit (1010) is arranged between the compressor system, the pneumatic actuator system (1012) and a compressed-air accumulator (1013), and said switching unit, in one switching state, allows an air flow exclusively in the direction from an outlet side of the high-pressure stage (107) to the pneumatic actuator system (1012) and simultaneously allows an air flow exclusively in the direction from the compressed-air accumulator (1013) to an inlet side of the high-pressure stage (107), and in a further switching state, allows an air flow exclusively in the direction from the outlet side of the high-pressure stage (107) to the compressed-air accumulator (1013) and simultaneously allows an air flow exclusively in the direction from the pneumatic actuator system (1012) to the inlet side of the high-pressure stage (107).

9. Compressor circuit according to Claim 8, wherein the switching unit (1010) is formed as a 4/2-way valve (1010) or is formed from a combination of two 3/2-way valves (301 and 302).

## Revendications

1. Circuit de compresseur pour un dispositif de réglage pneumatique d'un véhicule, le circuit de compresseur comprenant un système de compresseur à deux étages (100) avec un étage haute pression (107), un étage basse pression (101) et un volume supplémentaire commutable (103),
- l'étage haute pression (107) et l'étage basse pression (101) présentant un piston commun pour comprimer l'air se trouvant dans l'étage haute pression (107) et dans l'étage basse pression (101),
**caractérisé en ce que** :
- l'étage haute pression (107), en mode de fonctionnement d'une alimentation en air fermée, est réalisé pour effectuer des opérations de réglage pour transporter l'air depuis un accumulateur d'air sous pression (1013) dans la direction d'un système d'actionneur pneumatique (1012) et pour transporter l'air depuis le système d'actionneur pneumatique (1012) dans la direction de l'accumulateur d'air sous pression (1013),
- l'étage basse pression (101) est réalisé de telle sorte qu'en mode de fonctionnement de l'alimentation en air fermée, par commutation du volume supplémentaire, l'espace mort (103) de l'étage basse pression (101) soit augmenté et que l'air se trouvant dans l'espace mort de l'étage basse pression (101) agisse sur le piston en tant que ressort pneumatique.

2. Circuit de compresseur selon la revendication 1, comprenant en outre une conduite de débordement (104) et un premier clapet antiretour (105),
- l'étage haute pression (107) étant raccordé au niveau de son côté de sortie au système d'actionneur pneumatique et au niveau de son côté d'entrée à la conduite de débordement (104),
- l'étage basse pression (101) étant raccordé par son côté de sortie par le biais de la conduite de débordement (104) au côté d'entrée de l'étage haute pression (107),
- le premier clapet antiretour (105) étant disposé dans la conduite de débordement (104) et permettant un passage d'air exclusivement dans la direction allant de l'étage basse pression (101) à l'étage haute pression (107).

3. Circuit de compresseur selon la revendication 2, dans lequel le premier clapet antiretour (105) est réalisé de manière à réguler le rapport entre la pression s'appliquant au niveau du côté d'entrée de l'étage haute pression (107) et la pression s'appliquant au niveau du côté de sortie de l'étage basse pression (101).

4. Circuit de compresseur selon la revendication 3, dans lequel le circuit de compresseur comprend en outre une soupape de limitation de la pression (1015) et un deuxième clapet antiretour (1014), la soupape de limitation de la pression (1015) et le deuxième clapet antiretour (1014) étant disposés entre le côté de sortie de l'étage basse pression (101), le volume supplémentaire (103) et le côté d'entrée de l'étage haute pression (107), le deuxième clapet antiretour (1014) étant réalisé de manière à permettre un écoulement de l'air exclusivement dans la direction du côté de sortie de l'étage basse pression (101) vers le volume supplémentaire (103) et/ou dans la direction du côté d'entrée de l'étage haute pression (107), et la soupape de limitation de la pression (1015) étant réalisée de manière à permettre, dans un état de commutation, un trajet d'air entre le côté de sortie de l'étage basse pression (101), le volume supplémentaire (103) et le côté d'entrée de l'étage haute pression (107), et dans un autre état de commutation, de manière à supprimer le trajet d'air entre le côté de sortie de l'étage basse pression (101), le volume supplémentaire (103) et le côté d'entrée de l'étage haute pression (107).

5. Circuit de compresseur selon la revendication 4, dans lequel la soupape de limitation de la pression (1015) et le deuxième clapet antiretour (1014) forment un module, le module comprenant au moins un boîtier (207), un plateau d'étanchéité (202), un système de ressort (203), une ouverture (201) du boîtier (207) et une sortie (206) du boîtier (207),
- le plateau d'étanchéité (202) étant disposé de manière déplaçable dans le boîtier (207),
- le plateau d'étanchéité (202) pouvant être pressé de manière hermétique par le système de ressort (203) contre l'ouverture (201) du boîtier (207),
- le côté de sortie de l'étage basse pression (101) étant raccordé par un trajet d'air à l'ouverture (201),
- la sortie (206) du boîtier (207) étant réalisée de manière à permettre un trajet d'air entre l'espace interne du boîtier (207), le volume supplémentaire (103) et le côté d'entrée de l'étage haute pression (107),
- la sortie (206) du boîtier (207) étant disposée au niveau du boîtier (207) de telle sorte que dans le cas où le plateau d'étanchéité (202) est pressé hermétiquement par le système de ressort (203) contre l'ouverture (201) du boîtier (207), un trajet d'air entre la sortie (206) et l'intérieur du boîtier (207) soit possible et que dans le cas où le plateau d'étanchéité (202) libère l'ouverture (201), un trajet d'air entre la sortie (206) et l'ouverture (201) à travers le boîtier (207) soit possible.

6. Circuit de compresseur selon la revendication 3, dans lequel le système de compresseur présente en outre une puissance de refoulement, le rapport entre la pression s'appliquant au niveau du côté d'entrée de l'étage haute pression (107) et la pression s'appliquant au niveau du côté de sortie de l'étage basse pression (101) pouvant être réglé de telle sorte que la puissance de refoulement du système de compresseur soit ajustée à une valeur prédéfinie.

7. Circuit de compresseur selon la revendication 3, dans lequel le rapport entre la pression s'appliquant au niveau du côté d'entrée de l'étage haute pression (107) et la pression s'appliquant niveau du côté de sortie de l'étage basse pression (101) peut être réglé de telle sorte qu'un courant électrique nécessaire pour le fonctionnement du circuit de compresseur prenne une valeur prédéfinie.

8. Circuit de compresseur selon la revendication 1, dans lequel, pour le mode de fonctionnement de l'alimentation en air fermée, une unité de commutation (1010) est disposée entre le système de compresseur, le système d'actionneur pneumatique (1012) et l'accumulateur d'air sous pression (1013) et, dans un état de commutation, permet un flux d'air exclusivement dans la direction depuis un côté de sortie de l'étage haute pression (107) vers le système d'actionneur pneumatique (1012) et simultanément un flux d'air exclusivement dans la direction de l'accumulateur d'air sous pression (1013) vers un côté d'entrée de l'étage haute pression (107) et dans un autre état de commutation, permet un flux d'air exclusivement dans la direction du côté de sortie de l'étage pression (107) vers l'accumulateur d'air sous pression (1013) et simultanément un flux d'air exclusivement dans la direction du système d'actionneur pneumatique (1012) vers le côté d'entrée de l'étage haute pression (107).

9. Circuit de compresseur selon la revendication 8, dans lequel l'unité de commutation (1010) est réalisée sous forme de soupape à 4/2 voies (1010) ou sous forme d'une combinaison de deux soupapes à 3/2 voies (301 et 302).
